(19)

Europäisches Patentamt
European Patent Office
Office européen des brevets

(11) **EP 4 648 152 A1**

(12) **EUROPEAN PATENT APPLICATION**
published in accordance with Art. 153(4) EPC

(43) Date of publication:
**12.11.2025 Bulletin 2025/46**

(21) Application number: **24874967.3**

(22) Date of filing: **04.10.2024**

(51) International Patent Classification (IPC):
**H01M 10/04** (2006.01)     **B65H 19/29** (2006.01)
**B65H 35/00** (2006.01)

(52) Cooperative Patent Classification (CPC):
**B65H 19/29; B65H 35/00; H01M 10/04;** Y02E 60/10

(86) International application number:
**PCT/KR2024/015056**

(87) International publication number:
**WO 2025/075411 (10.04.2025 Gazette 2025/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.10.2023 KR 20230131820
02.10.2024 KR 20240133909**

(71) Applicant: **LG Energy Solution, Ltd.
Seoul 07335 (KR)**

(72) Inventors:
• **CHOI, Yongho
  Daejeon 34122 (KR)**
• **KIM, Seoyeon
  Daejeon 34122 (KR)**
• **KIM, In Kwon
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ELECTRODE ASSEMBLY MANUFACTURING APPARATUS AND ELECTRODE ASSEMBLY MANUFACTURING METHOD**

(57)     The present invention relates to an electrode assembly manufacturing apparatus and an electrode assembly manufacturing method including a process of attaching a tape to an electrode assembly by using same, the electrode assembly manufacturing apparatus comprising: a rotating roll; a plurality of electrode assembly accommodation grooves provided at the circumference of the rotating roll; and a guide block provided between any one of the plurality of electrode assembly accommodation grooves and another electrode assembly accommodation groove adjacent thereto to provide a tape to each electrode assembly to be accommodated in the electrode assembly accommodation grooves.

[FIG. 1]

**Description**

[Technical Field]

The present application claims priority to and the benefit of Korean Patent Application No. 10-2023-0131820 filed with the Korean Intellectual Property Office on October 4, 2023, and Korean Patent Application No. 10-2024-0133909 filed with the Korean Intellectual Property Office on October 2, 2024, the entire contents of which are incorporated herein by reference.

The present invention relates to an apparatus for manufacturing an electrode assembly by supplying a tape to the electrode assembly, and a method of manufacturing an electrode assembly including a process of attaching a tape to an outer periphery of an electrode assembly.

[Background Art]

Recently, small-scale, light-weight, high-capacity, high-voltage power sources have been required as power sources such as batteries for mobile phones, television cameras, notebook computers, and electric vehicles (e.g., hybrid vehicles). For example, secondary batteries, such as lithium-ion polymer batteries or lithium batteries, are used as these power sources.

In the case of a cylindrical, angular, or pouch-type battery, a jelly-roll type electrode assembly is manufactured by winding a long electrode, which has a predetermined width, together with a separator. The secondary battery is manufactured by inserting the manufactured electrode assembly into a battery casing for accommodating the electrode assembly. At least one tape may be attached to ensure stability of a shape of the wound electrode assembly. Particularly, the tape may be attached to fix a distal end of an outer periphery of the electrode assembly.

In this case, an operator may manually and directly attach the tape. In this case, a defect may occur because a cutting length and an attachment position of the tape are not uniform, the adhesion is not appropriately performed because of a decrease in adhesive force of a portion being in contact with the hand, or the electrode and the separator are separated in disposition in the electrode assembly because of separation of the tape during a subsequent process.

There is a need for a taping device capable of being applied to automation for reducing a human error.

[Detailed Description of the Invention]

[Technical Problem]

The present invention has been made in an effort to provide an apparatus for manufacturing an electrode assembly by supplying a tape to the electrode assembly, and a method of manufacturing an electrode assembly including a process of attaching a tape to an outer periphery of an electrode assembly.

[Technical Solution]

An embodiment of the present invention provides an apparatus for manufacturing an electrode assembly, the apparatus including: a rotary roll; a plurality of electrode assembly accommodation grooves provided around the rotary roll; and guide blocks each provided between any one electrode assembly accommodation groove and another adjacent electrode assembly accommodation groove among the plurality of electrode assembly accommodation grooves and configured to provide a tape to the electrode assembly to be accommodated in the electrode assembly accommodation groove, in which the guide block includes holders protruding along two opposite surfaces in a longitudinal direction of the tape.

In another embodiment of the present invention, a surface of the guide block, which is configured to come into contact with a bonding surface of the tape, may have a fine concave-convex layer and a vacuum hole.

In another embodiment of the present invention, the apparatus may further include: a tape supply roll configured to suck a non-bondable surface of the tape and supply the tape to the guide block and an outer periphery of the electrode assembly, which is accommodated in any one electrode assembly accommodation groove among the plurality of electrode assembly accommodation grooves, so that a bonding surface of the tape comes into contact with the guide block and the outer periphery of the electrode assembly.

In another embodiment of the present invention, a rotation direction of the tape supply roll and a rotation direction of the rotary roll may be different from each other.

In another embodiment of the present invention, a rotation of the tape supply roll and a rotation of the rotary roll may be intermittently or continuously performed. In this case, the configuration in which the rotation is intermittently performed means that processes of performing the rotation for a predetermined time and stopping the rotation for a predetermined time are repeated. The configuration in which the rotation is continuously performed means that a series of processes are continuously performed in a state in which the rotation is not stopped as long as there is no defect or breakdown.

The rotation of the tape supply roll and the rotation of the rotary roll may be continuously performed. In this case, the supply of the tape and the attachment of the tape to the electrode assembly may be continuously performed without stopping the rotation. One end of the bonding surface of the tape on the rotating tape supply roll may be bonded to the outer periphery of the electrode assembly, which is accommodated in any one electrode assembly accommodation groove among the plurality of electrode assembly accommodation grooves, by a rotation of the rotary roll, and the tape may be moved from the tape supply roll to the outer periphery of the electrode assembly and the guide block.

In another embodiment of the present invention, the apparatus may further include: a rotation part configured to rotate the electrode assembly to pull the remaining part of the tape being in contact with the guide block and bond the entire bonding surface of the tape to the outer periphery of the electrode assembly.

In another embodiment of the present invention, the apparatus may further include: an electrode assembly supply part configured to supply the electrode assemblies to the plurality of electrode assembly accommodation grooves.

In another embodiment of the present invention, the apparatus may further include: an electrode assembly recovery part configured to recover the electrode assembly to which the tape is bonded.

In another embodiment of the present invention, the apparatus may further include: a tape roll; and a cutter configured to cut a tape of the tape roll.

In another embodiment of the present invention, a protruding length of the holder may be 0.5 mm or more and 1 cm or less.

In another embodiment of the present invention, a rotational speed of the electrode assembly made by the rotation part may be 30 rpm or more and 180 rpm or less.

In another embodiment of the present invention, a diameter of the vacuum hole may be 0.8 mm or more and 2 mm or less.

In another embodiment of the present invention, the vacuum hole may be provided as a plurality of vacuum holes, and a distance between any one vacuum hole and another adjacent vacuum hole may be 4 mm or more and 6 mm or less.

In another embodiment of the present invention, an average thickness of the fine concave-convex layer may be 0.1 mm or more and 0.3 mm or less or 0.15 mm or more and 0.25 mm or less.

Another embodiment of the present invention provides a method of manufacturing an electrode assembly, the method including: attaching a tape to an outer periphery of the electrode assembly by using the apparatus for manufacturing an electrode assembly.

In another embodiment of the present invention, the method may further include: sucking a non-bondable surface of the tape onto a tape supply roll; and supplying the tape to the guide block and the outer periphery of the electrode assembly, which is accommodated in any one electrode assembly accommodation groove among the plurality of electrode assembly accommodation grooves, so that a bonding surface of the tape comes into contact with the guide block and the outer periphery of the electrode assembly.

In another embodiment of the present invention, a rotation direction of the tape supply roll and a rotation direction of the rotary roll may be different from each other.

In another embodiment of the present invention, the supplying of the tape may include: bonding one end of the bonding surface of the tape on the rotating tape supply roll to the outer periphery of the electrode assembly, which is accommodated in any one electrode assembly accommodation groove among the plurality of electrode assembly accommodation grooves, by a rotation of the rotary roll; and moving the tape from the tape supply roll to the outer periphery of the electrode assembly and the guide block by the continuous rotation of the tape supply roll and the continuous rotation of the rotary roll.

In another embodiment of the present invention, the attaching of the tape to the outer periphery of the electrode assembly may include rotating the electrode assembly to pull the remaining part of the tape being in contact with the guide block and bond the entire bonding surface of the tape to the outer periphery of the electrode assembly.

In another embodiment of the present invention, the method may further include: supplying electrode assemblies to the plurality of electrode assembly accommodation grooves.

In another embodiment of the present invention, the method may further include: recovering the electrode assembly to which the tape is attached.

In another embodiment of the present invention, the method may further include: cutting a tape unwound from a tape roll.

[Advantageous Effects]

The apparatus for manufacturing an electrode assembly of the embodiment of the present invention may intermittently or continuously attach the tape to the plurality of electrode assemblies.

The apparatus for manufacturing an electrode assembly according to another embodiment of the present invention may adjust the speed of attaching the tape and attach the tape at a relatively high speed.

The apparatus for manufacturing an electrode assembly of another embodiment of the present invention has an advantage in that a defect rate is low even though the tape is attached at high speed.

[Brief Description of Drawings]

FIG. 1 is a top plan view of an apparatus for manufacturing an electrode assembly according to an embodiment of the present invention.

FIG. 2 is an enlarged view of a guide block according to the embodiment of the present invention.

FIG. 3 is a cross-sectional view illustrating a cross-section of the guide block taken along line A-A' in FIG. 2.

FIG. 4 is a top plan view of an apparatus for manufacturing an electrode assembly according to another embodiment of the present invention.

FIG. 5 is a view illustrating an initial state of a tape attached to the guide block according to another embodiment of the present invention.

FIG. 6 is a view illustrating a state in which the tape attached to the guide block is moved by a rotation of an electrode assembly according to another embodiment of the present invention.

FIG. 7 is a view illustrating a state in which the tape attached to the guide block according to another embodiment of the present invention is completely moved to an outer periphery of the electrode assembly.

[Explanation of Reference Numerals and Symbols]

1: Electrode assembly
2: Tape
2': Non-bondable surface of tape
2": Bonding surface of tape
10: Rotary roll
20: Electrode assembly accommodation groove
20-1 to 20-12: First to twelfth electrode assembly accommodation grooves
30: Guide block
31, 32: Holder
35: Fine concave-convex layer
36: Vacuum hole
36-1: Lateral vacuum hole
37: Fastening groove
40: Tape supply roll
50: Tape roll
60: Cutter
100: Apparatus for manufacturing electrode assembly

[Best Mode]

Hereinafter, the present invention will be described in detail with reference to the drawings. However, the drawings are intended to illustratively describe the present invention, and the scope of the present invention is not limited by the drawings.

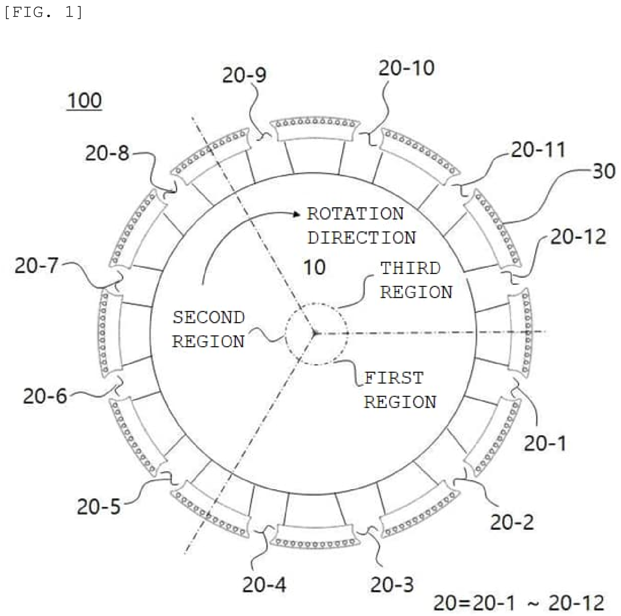

FIG. 1 is a top plan view of an apparatus 100 for manufacturing an electrode assembly according to an embodiment of the present invention.

The apparatus 100 for manufacturing an electrode assembly according to the embodiment of the present invention includes a rotary roll 10, electrode assembly accommodation grooves 20, and guide blocks 30.

A shape, in which the rotary roll 10 is provided, or a configuration, in which the rotary roll 10 provides a rotational force, is not limited as long as the rotary roll 10 is connected to the guide block 30 and the connected guide block 30 is moved by a rotation of the rotary roll 10. The connection between the rotary roll 10 and the guide block 30 is not specially limited. The rotary roll 10 and the guide block 30 may be connected by means of a separate connection part or connected directly. In this case, a fastening groove 37 may be provided so that the guide block 30 is connected to the rotary roll 10.

The rotation of the rotary roll 10 may be continuously performed. In this case, the configuration in which the rotation is continuously performed means that the rotation is intermittently or continuously performed. Specifically, the configuration in which the rotation is intermittently performed means that processes of performing the rotation for a predetermined time and stopping the rotation for a predetermined time are repeated. The configuration in which the rotation is continuously performed means that a series of processes are continuously repeated in a state in which the rotation is not stopped as long as there is no defect or breakdown.

The plurality of electrode assembly accommodation grooves 20 is provided around the rotary roll 10. Specifically, as illustrated in FIG. 1, a total of twelve electrode assembly accommodation grooves 20, i.e., first to twelfth electrode assembly accommodation grooves 20-1, 20-2, 20-3, 20-4, 20-5, 20-6, 20-7, 20-8, 20-9, 20-10, 20-11, and 20-12 may be provided. However, the number of electrode assembly accommodation grooves 20 may increase or decrease, and the number of electrode assembly accommodation grooves 20 is not limited to twelve.

The guide block 30 is provided between any one electrode assembly accommodation groove and another adjacent electrode assembly accommodation groove among the plurality of electrode assembly accommodation grooves 20. With reference to FIG. 1, the guide block 30 is provided between a first electrode assembly accommodation groove 20-11 and a second electrode assembly accommodation groove 20-12. The number of guide blocks 30 each provided between any one electrode assembly accommodation groove and another adjacent electrode assembly accommodation groove is determined depending on the number of electrode assembly accommodation grooves 20. For example, as illustrated in FIG. 1, a total of twelve electrode assembly accommodation grooves 20-1, 20-2, 20-3, 20-4, 20-5, 20-6, 20-7, 20-8, 20-9, 20-10, 20-11, and 20-12 are provided, a total of twelve the guide blocks 30 may be provided between the electrode assembly accommodation grooves.

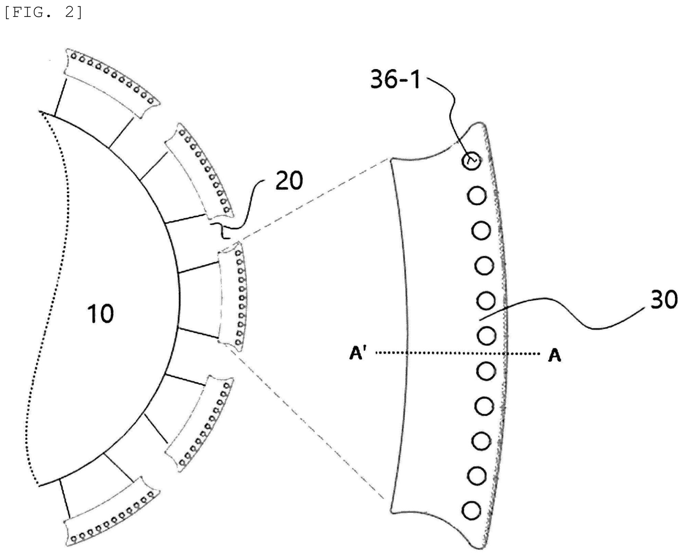

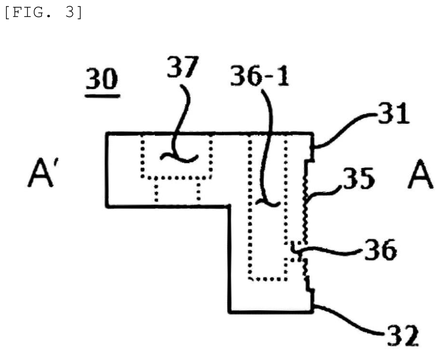

FIG. 2 is an enlarged view of the guide block 30 according to the embodiment of the present invention, and FIG. 3 is a cross-sectional view illustrating a cross-section of the guide block 30 taken along line A-A' in FIG. 2.

The guide block 30 includes holders 31 and 32 protruding along two opposite surfaces in a longitudinal direction of the tape 2. The holders 31 and 32 guide a movement of a tape 2 attached to the guide block 30 so that the tape 2 may be attached to an outer periphery of an electrode assembly 1 without being separated. A protruding length of each of the holders 31 and 32 may be 0.1 mm or more and 1 cm or less, 0.2 mm or more and 1 cm or less, 0.3 mm or more and 1 cm or less, 0.4 mm or more and 1 cm or less, 0.5 mm or more and 1 cm or less, 0.5 mm or more and 9 mm or less, 0.5 mm or more and 8 mm or less, 0.5 mm or more and 7 mm or less, 0.5 mm or more and 6 mm or less, 0.5 mm or more and 5 mm or less, 0.5 mm or more and 4 mm or less, 0.5 mm or more and 3 mm or less, 0.5 mm or more and 2 mm or less, 0.5 mm or more and 1 mm or less, 0.5 mm or more and 0.9 mm or less, 0.5 mm or more and 0.8 mm or less, 0.5 mm or more and 0.7 mm or less, or about 0. 6 mm. In this case, there is an effect of solving a serpentine defect when the tape 2 is attached to an outer periphery of the electrode assembly 1.

A vacuum hole 36 is provided in a surface of the guide block 30 configured to come into contact with a bonding surface 2" of the tape 2. A diameter of the vacuum hole 36 may vary depending on a size of the guide block 30. The diameter of the vacuum hole may be 0.1 mm or more. Specifically, the diameter of the vacuum hole may be 0.1 mm or more and 10 mm or less, 0.5 mm or more and 9 mm or less, 0.5 mm or more and 8 mm or less, 0.5 mm or more and 7 mm or less, 0.5 mm or more and 6 mm or less, 0.5 mm or more and 5 mm or less, 0.5 mm or more and 4 mm or less, 0.5 mm or more and 3 mm or less, 0.8 mm or more and 2 mm or less, or about 1 mm (1Φ). In this case, tension of the tape 2 may be maintained without damaging the tape 2.

The plurality of vacuum holes 36 may be spaced apart from one another and disposed in surfaces of the guide blocks 30 configured to come into contact with the bonding surface 2" of the tape 2. The number of vacuum holes 36 may vary depending on the sizes of the guide blocks 30.

The number of vacuum holes 36 may be 50 or more, 60 or more, 70 or more, or 80 or more. An upper limit value of the number of vacuum holes 36 may be determined depending on areas of the guide blocks 30 and spacing distances between the vacuum holes 36. The upper limit value of the number of vacuum holes 36 may be 200 or less, 150 or less, or 100 or less. In this case, when the tape 2 is attached to the electrode assembly 1 without being wrinkled, a defect with bubbles is solved.

In addition, a distance between any one vacuum hole and another adjacent vacuum hole may be 1 mm or more and 10 mm or less, 2 mm or more and 9 mm or less, 3 mm or more and 8 mm or less, 4 mm or more and 7 mm, less or 4 mm or more and 6 mm or less, or about 5 mm. In this case, when the tape 2 is attached to the electrode assembly 1 without being wrinkled, a defect with bubbles is solved. In this case, the distance between any one vacuum hole and another adjacent vacuum hole is a distance between a center of any one vacuum hole and a center of another adjacent vacuum hole.

In another embodiment, a lateral vacuum hole 36-1 connected to the vacuum hole 36 may be further provided and connected to a device, which applies a vacuum, through the lateral vacuum hole 36-1. The vacuum pressure is set to the extent that tension is maintained without damaging the attached tape 2. Specifically, the vacuum pressure may be -50 to -10 kPa. In this case, tension of the tape 2 may be maintained without damaging the tape 2.

The surface of the guide block 30, which is configured to come into contact with the bonding surface 2" of the tape 2, is subjected to Tosical coating. The Tosical coating refers to a method of forming a concave-convex portion on a surface and performing coating by using special resin. A non-bondable surface is formed by the Tosical coating. The Tosical coating is performed by forming a concave-convex portion on a surface by spraying fine particles at high speed first and then coating the concave-convex portion with fluorine-based special resin. A material of the fine particle may be nickel, chromium, or the like. RTX-8000 of Release Tech, RT-1000 of Release Tech, or the like may be used as the special resin.

A fine concave-convex layer 35 is provided on the surface of the guide block by the Tosical coating. An average thickness of the fine concave-convex layer 35 may be 0.1 mm or more and 1 mm or less, 0.1 mm or more and 0.9 mm or less, 0.1 mm or more and 0.8 mm or less, 0.1 mm or more and 0.7 mm or less, 0.1 mm or more and 0.6 mm or less, 0.1 mm or more and 0.5 mm or less, 0.1 mm or more and 0.4 mm or less, 0.1 mm or more and 0.3 mm or less, or about 0.2 mm. In this case, the surface of the guide block 30 is not bonded to the bonding surface 2" of the tape 2 even though the surface of the guide block 30 comes into contact with the bonding surface 2" of the tape 2. The contacting tape 2 may be moved to the outer periphery of the electrode assembly 1 while being pulled by the rotation of the electrode assembly 1.

A degree of the concave-convex portion of the fine concave-convex layer 35 may be 0.4 mm or less, 0.3 mm or less, 0.2 mm or less, or 0.1 mm or less. In this case, a degree of the concave-convex portion refers to a height difference between a crest and a trough of the concave-convex portion.

An arithmetic mean roughness Ra of the fine concave-convex layer 35 may be 0.5 μm or more and 10 μm or less. Specifically, the arithmetic mean roughness Ra of the fine concave-convex layer 35 may be 0.5 μm or more, 0.6 μm or more, 0.7 μm or more, 0.8 μm or more, 0.9 μm or more, or 1 μm or more and 10 μm or less, 9 μm or less, 8 μm or less, 7 um or less, 6 μm or less, 5 μm or less, 4 μm or less, 3 μm or less, or 2 μm or less. In this case, the arithmetic mean roughness is shown as a value of micrometer (μm) obtained by the following equation when a roughness curved line is expressed as function y=f (x) when the roughness curved line extends by a reference length L in an average line direction, an X-axis is defined in the average line direction, and a Y-axis is defined in a height direction.

$$R_c = \frac{1}{L} \int_0^l f(x)\,dx$$

A 10-point average roughness Rz of the fine concave-convex layer 35 may be 1 μm or more and 50 μm or less. Specifically, the 10-point average roughness Rz of the fine concave-convex layer 35 may be 1 μm or more, 2 μm or more, 3 μm or more, 4 μm or more, or 5 μm or more and 50 μm or less, 40 μm or less, 30 μm or less, 20 μm or less, 10 μm or less, 9 μm or less, 8 μm or less, 7 μm or less, or 6 μm or less. In this case, the 10-point average roughness is shown as a value of micrometer (μm) made by adding up an average value of absolute values of heights $P_1$, $P_2$, $P_3$, $P_4$, and $P_5$ from the highest crest, which is measured in the height direction based on the roughness curved line extending by the reference length L in the average line direction to a fifth crest and an average value of absolute values of depths $V_1$, $V_2$, $V_3$, $V_4$, and $V_5$ from the lowest trough to a fifth trough.

$$R_z = \frac{(P_1 + P_2 + P_3 - P_4 + P_5) - (V_1 + V_2 + V_3 + V_4 - V_5)}{5}$$

The guide block 30 may provide the tape 2 to the electrode assembly 1 to be accommodated in the electrode assembly accommodation groove 20.

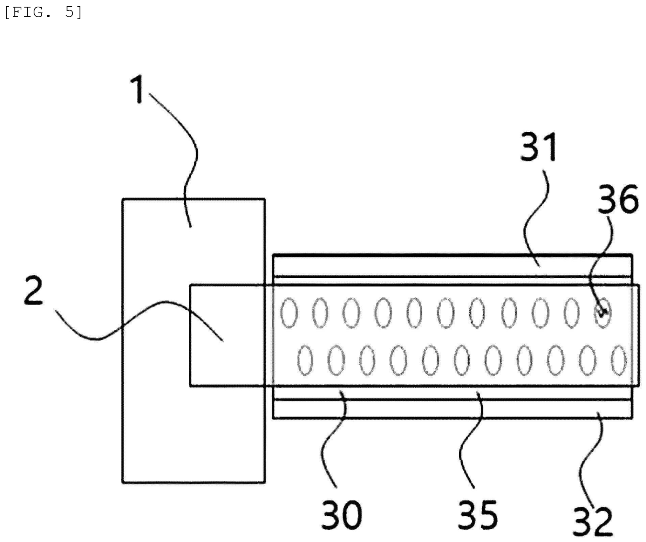

FIG. 5 is a view illustrating an initial state of the tape attached to the guide block according to another embodiment of the present invention.

As illustrated in FIG. 5, in the initial state of the tape attached to the guide block 30, a part of the tape 2 is bonded to the outer periphery of the electrode assembly 1, and the remaining part of the tape 2 is in contact with the guide block 30. A part of an overall length of the tape 2 may be bonded to the outer periphery of the electrode assembly 1 and serve as a support capable of pulling the remaining part of the tape 2 being in contact with the guide block 30. In this case, an initial bonding length may be determined depending on an overall length of the tape 2. Specifically, the initial bonding length may be 5 mm or more, 6 mm or more, 7 mm or more, 8 mm or more, 9 mm or more, or 10 mm or more and 20 mm or less. For example, when the overall length of the tape 2 is 140 mm, the initial bonding length bonded to the outer periphery of the electrode assembly 1 may be 10 mm.

The apparatus 100 for manufacturing an electrode assembly according to another embodiment of the present invention may further include a rotation part (not illustrated) of the electrode assembly 1.

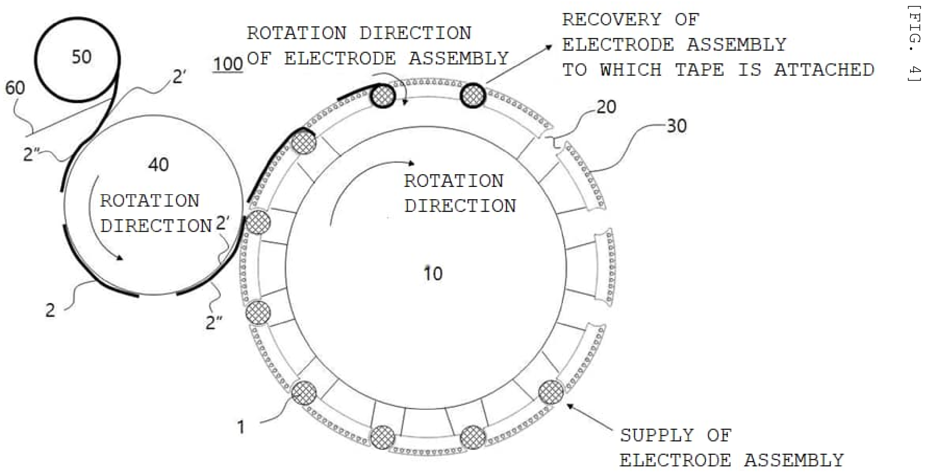

The rotation part of the electrode assembly 1 may rotate the electrode assembly 1, as illustrated in FIG. 4. In this case, in case that the rotation of the rotary roll 10 is a revolution, the rotation of the electrode assembly 1 may be a rotation.

In the present invention, a rotational speed of the electrode assembly 1 made by the rotation part may be 30 rpm or more and 180 rpm or less, 40 rpm or more and 150 rpm or less, 50 rpm or more and 120 rpm or less, 60 rpm or more and 100 rpm or less, and about 60 rpm. In this case, rpm refers to revolutions per minute, the unit rev/s may be used as revolutions per second, and 1 rev/s means 60 rpm.

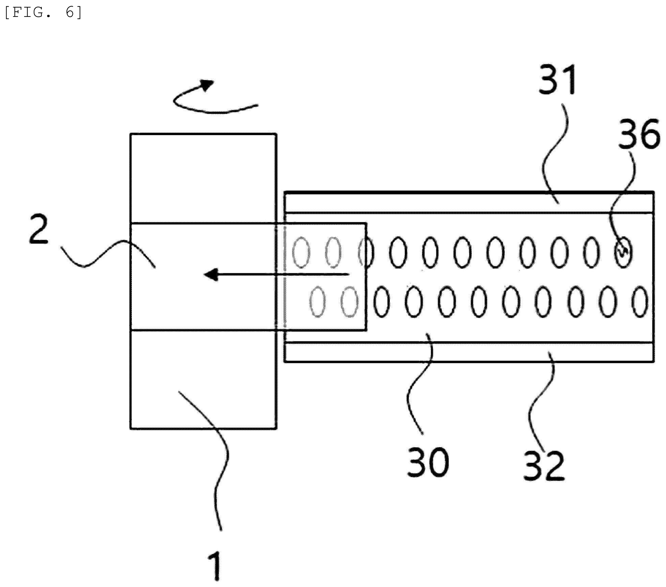

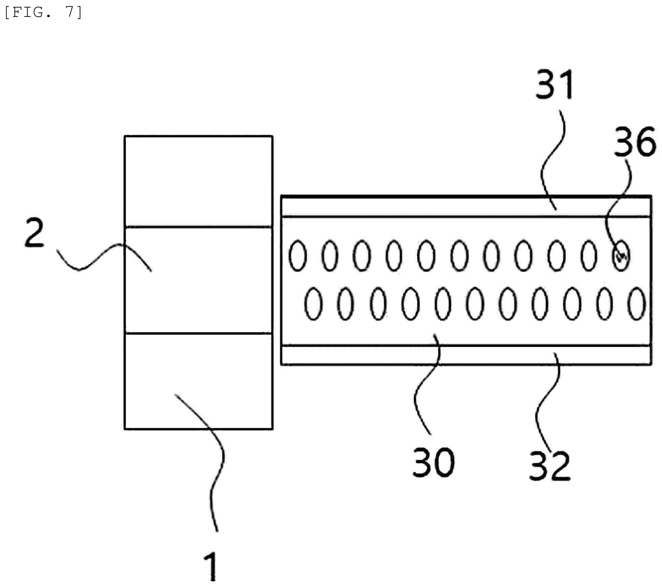

The rotation part of the electrode assembly 1 may rotate the electrode assembly 1 to pull the remaining part of the tape 2 being in contact with the guide block 30 and bond the entire bonding surface 2" of the tape 2 to the outer periphery of the electrode assembly 1. The tape 2 attached to the guide block 30 is moved by the rotation of the electrode assembly 1 as illustrated in FIG. 6, and the tape 2 attached to the guide block 30 is completely moved to the outer periphery of the electrode assembly 1 as illustrated in FIG. 7.

The rotation part of the electrode assembly 1 does not continuously rotate. The rotation part of the electrode assembly 1 rotates until the tape 2 is completely moved to the outer periphery of the electrode assembly 1 after the tape 2 is attached to the guide block 30 and the outer periphery of the electrode assembly 1.

FIG. 4 is a top plan view of an apparatus for manufacturing an electrode assembly according to another embodiment of the present invention.

The apparatus 100 for manufacturing an electrode assembly according to another embodiment of the present invention may further include a tape roll 50, a cutter 60, and a tape supply roll 40.

As illustrated in FIG. 4, the tape supply roll 40 may suck a non-bondable surface 2' of the tape 2 and supply the tape 2 to the guide block 30 and the outer periphery of the electrode assembly 1, which is accommodated in any one electrode assembly accommodation groove among the plurality of electrode assembly accommodation grooves 20, so that the bonding surface 2" of the tape 2 comes into contact with the guide block 30 and the outer periphery of the electrode assembly 1. Specifically, one end of the bonding surface 2" of the tape on the rotating tape supply roll 40 is bonded to the outer periphery of the electrode assembly 1, which is accommodated in any one electrode assembly accommodation groove among the plurality of electrode assembly accommodation grooves, by the rotation of the rotary roll 10, and the tape 2 may move to the outer periphery of the electrode assembly 1 and the guide block 30 from the tape supply roll 40.

A rotation direction of the tape supply roll 40 and a rotation direction of the rotary roll 10 may be equal to or different from each other. As illustrated in FIG. 4, the rotation direction of the tape supply roll 40 and the rotation direction of the rotary roll 10 may be different from each other.

The tape supply roll 40 may have a plurality of vacuum holes that may suck the tape 2 supplied to the surface of the tape supply roll 40. In this case, the vacuum pressure may be set to the extent that the attached tape 2 is not damaged. Specifically, the vacuum pressure may be -50 to -10 kPa.

The rotation of the tape supply roll 40 may be continuously performed. In this case, the configuration in which the rotation is continuously performed means that the rotation is intermittently or continuously performed. Specifically, the configuration in which the rotation is intermittently performed means that processes of performing the rotation for a predetermined time and stopping the rotation for a predetermined time are repeated. The configuration in which the rotation is continuously performed means that a series of processes are continuously repeated in a state in which the rotation is not stopped as long as there is no defect or breakdown.

The tape roll 50 refers to a roll wound in a state in which the tape roll is not cut. In this manner, the tape 2 may be unwound from the tape roll 50 wound continuously without interruption, one end of the unwound tape 2 may be sucked onto the surface of the tape supply roll 40, and the tape 2 may be cut into a predetermined length by the cutter 60.

As illustrated in FIG. 4, the tape 2 sucked onto the tape supply roll 40 may be the tape 2 cut into a predetermined length.

The apparatus 100 for manufacturing an electrode assembly according to another embodiment of the present invention may further include an electrode assembly supply part (not illustrated) and an electrode assembly recovery part (not illustrated).

The electrode assembly supply part is configured to supply the electrode assemblies to the plurality of electrode assembly accommodation grooves, and the electrode assembly recovery part is configured to recover the electrode assembly 1 to which the tape 2 is bonded.

As illustrated in FIG. 1, the apparatus 100 for manufacturing an electrode assembly may be divided into a first region in which the electrode assembly 1 is supplied, a second region in which the tape 2 is attached to the outer periphery of the electrode assembly 1 and the guide block 30, the tape 2 of the guide block 30 is pulled by the rotation of the electrode assembly 1, and the tape 2 is completely bonded to the outer periphery of the electrode assembly 1, and a third region in which the electrode assembly 1 to which the tape 2 is completely bonded is recovered. The three regions, which are separated as described above, are repeated by the rotation of the rotary roll 10 as illustrated in FIG. 4, such that the process of attaching the tape to the outer periphery of the electrode assembly 1 may be continuously repeated.

In the present invention, the apparatus 100 for manufacturing an electrode assembly refers to an apparatus for attaching the tape 2 to the outer periphery of the electrode assembly 1 in which a positive electrode, a negative electrode, and a separator, which is provided between the positive electrode and the negative electrode, are stacked and wound. In summary, the apparatus is a post-process apparatus for attaching the tape 2 to the electrode assembly 1 having been completely subjected to pre-processing. The electrode assembly 1 is manufactured in a way known in the art. The electrode assembly 1 may be applied when the tape 2 needs to be attached to the outer periphery of the electrode assembly 1 in the wound state.

Still another embodiment of the present invention provides a method of manufacturing an electrode assembly including a step of attaching the tape 2 to the outer periphery of the electrode assembly 1 by using the apparatus for manufacturing an electrode assembly.

In the method of manufacturing an electrode assembly of the present invention, the description of the apparatus 100 for manufacturing an electrode assembly may be replaced with the above-mentioned description.

In another embodiment of the present invention, the method may further include sucking the non-bondable surface 2' of the tape onto the tape supply roll 40, and supplying the tape 2 to the guide block and the outer periphery of the electrode assembly, which is accommodated in any one electrode assembly accommodation groove among the plurality of electrode assembly accommodation grooves 20, so that the bonding surface 2" of the tape 2 comes into contact with the guide block and the outer periphery of the electrode assembly.

In another embodiment of the present invention, the supplying of the tape 2 may include bonding one end of the bonding surface 2" of the tape 2 on the rotating tape supply roll 40 to the outer periphery of the electrode assembly 1, which is accommodated in any one electrode assembly accommodation groove among the plurality of electrode assembly accommodation grooves 20, by the rotation of the rotary roll 10, and moving the tape 2 from the tape supply roll 40 to the outer periphery of the electrode assembly 1 and the guide block 30 by the continuous rotation of the tape supply roll 40 and the continuous rotation of the rotary roll 10.

In another embodiment of the present invention, the attaching of the tape 2 to the outer periphery of the electrode assembly 1 may include rotating the electrode assembly 1 to pull the remaining part of the tape 2 being in contact with the guide block 30 and bond the entire bonding surface 2" of the tape 2 to the outer periphery of the electrode assembly 1.

In another embodiment of the present invention, the method may further include supplying the electrode assemblies 1 to the plurality of electrode assembly accommodation grooves 20.

In another embodiment of the present invention, the method may further include recovering the electrode assembly 1 to which the tape 2 is attached.

In another embodiment of the present invention, the method may further include cutting the tape 2 unwound from the tape roll 50.

[Mode for Invention]

Hereinafter, the present specification will be described in more detail with reference to Examples. However, the following examples are intended to illustratively describe the present specification, and the scope of the present specification is not limited by the following examples.

[Manufacturing Example]

The guide block was manufactured under a condition shown in Table 1 below, and the other components were manufactured in the same way. In this case, the vacuum holes in the following example are provided with a diameter of $1\Phi$, a hole interval of 5 mm, and a number of 80, and disposed in 5 rows X 16 columns in the same way. Tosical coating (RTX-8000 Tosical coating of Release Tech, main coating material: fluorine resin-based material) formed a fine concave-convex layer by coating the tape bonding surface of the guide block with an average thickness of about 0.2 mm. In this case, the formed fine concave-convex layer had Ra of 1 $\mu$m and Rz of 5 $\mu$m.

[Table 1]

| Classification | Whether Tosical coating is performed | Whether vacuum hole is provided | Tape contact surface shape | Whether holder is present |
|---|---|---|---|---|
| Comparative Example | ○ | × | With V-shaped groove | ○ |
| Example | ○ | ○ (Vacuum pressure: - 10 kPa) | Flat surface | ○ |

In this case, a level difference (a height difference between a crest and a trough) of the V-shaped groove of Comparative Example was 0.5 mm, a pitch interval (a distance between the two adjacent crests) was 3.5 mm, and a total of twelve V-shaped grooves were formed.

[Experimental Examples]

Each of the guide blocks manufactured by the above-mentioned manufacturing example was connected to the rotary roll, and the tape was attached to the outer periphery of the electrode assembly. In this case, the serpentines, horizontal wrinkles, vertical wrinkles, and handover deviations related to Example and Comparative Example were identified, and results thereof are summarized in Table 2 below.

In this case, for the serpentine test, a difference between a top surface of the tape attached first and a top surface of the tape attached lastly was checked with a vernier caliper to ensure that the serpentine specification was within $\pm 2.5$ mm.

The occurrence of the horizontal and vertical wrinkles were determined by shapes of the wrinkles identified with the naked eye.

The handover deviation was measured as a distance by which the tape was spaced apart from a bottom surface (tape guide surface) of a protrusion within the specification of $\pm 0.5$ mm by means of a vision camera.

[Table 2]

| Classification | Serpentine (Spec. $\pm 2.5$mm) | Horizontal wrinkle (EA) | Vertical wrinkle (EA) | Handover deviation (mm) |
|---|---|---|---|---|
| Comparative Example | Overall 24/108 (22%) <br> 0.5 mm (11), 1.0 mm (10) <br> 1.5 mm (3) | 0/108 (0%) | 40/108 (37%) | $\pm 0.5$ |
| Example | Overall 0/35 (0%) (overall serpentine level $\pm 0.25$ mm) | 0/35 (0%) | 0/35 (0%) | $\pm 0.25$ |

It may be ascertained from Table 2 that in Example, the vertical wrinkle properties are improved, and a rate of incidence of serpentine is remarkably reduced from 22% to 0% in comparison with Comparative Example. In addition, it is ascertained that a difference between areas with which the tape bonding surface comes into contact, i.e., a difference between the guide surface related to troughs (V groove) and flat surfaces is large. In this case, it is ascertained that the area of the contact surface is an important element when a vacuum suction method is applied.

In this case, a "flat surface" is a state in which no groove is mechanically formed and only a fine concave-convex portion is formed by the Tosical coating. The flatness of the "flat surface" is a degree to which it looks flat to the naked eye and feels rough to the touch. A degree of the concave-convex portion of the flat surface may be 0.4 mm or less, 0.3 mm or less, 0.2 mm or less, or 0.1 mm or less. In contrast, in Comparative Example, a 'V-shaped groove' is mechanically formed in a longitudinal direction of a tape in addition to Tosical coating.

**Claims**

1. An apparatus for manufacturing an electrode assembly, the apparatus comprising:

   a rotary roll;
   a plurality of electrode assembly accommodation grooves provided around the rotary roll; and
   guide blocks each provided between any one electrode assembly accommodation groove and another adjacent electrode assembly accommodation groove among the plurality of electrode assembly accommodation grooves and configured to provide a tape to the electrode assembly to be accommodated in the electrode assembly accommodation groove,
   wherein the guide block comprises holders protruding along two opposite surfaces in a longitudinal direction of the tape.

2. The apparatus of claim 1, wherein a surface of the guide block, which is configured to come into contact with a bonding surface of the tape, has a fine concave-convex layer and at least one vacuum hole.

3. The apparatus of claim 1, further comprising:

   a tape supply roll configured to suck a non-bondable surface of the tape and supply the tape to the guide block and an outer periphery of the electrode assembly, which is accommodated in any one electrode assembly accommodation groove among the plurality of the electrode assembly accommodation grooves, so that a bonding surface of the tape comes into contact with the guide block and the outer periphery of the electrode assembly.

4. The apparatus of claim 3, wherein a rotation direction of the tape supply roll and a rotation direction of the rotary roll are different from each other.

5. The apparatus of claim 3, wherein a rotation of the tape supply roll and a rotation of the rotary roll are continuously performed, and
wherein one end of the bonding surface of the tape on the rotating tape supply roll is bonded to the outer periphery of the electrode assembly, which is accommodated in any one electrode assembly accommodation groove among the plurality of electrode assembly accommodation grooves, by a rotation of the rotary roll, and the tape is moved from the tape supply roll to the outer periphery of the electrode assembly and the guide block.

6. The apparatus of claim 5, further comprising:
a rotation part configured to rotate the electrode assembly to pull the remaining part of the tape being in contact with the guide block and bond the entire bonding surface of the tape to the outer periphery of the electrode assembly.

7. The apparatus of claim 1, further comprising:
an electrode assembly supply part configured to supply the electrode assemblies to the plurality of electrode assembly accommodation grooves.

8. The apparatus of claim 1, further comprising:
an electrode assembly recovery part configured to recover the electrode assembly to which the tape is bonded.

9. The apparatus of claim 1, further comprising:

a tape roll; and
a cutter configured to cut a tape of the tape roll.

10. The apparatus of claim 1, wherein a protruding length of the holder is 0.5 mm or more and 1 cm or less.

11. The apparatus of claim 6, wherein a rotational speed of the electrode assembly made by the rotation part is 30 rpm or more and 180 rpm or less.

12. The apparatus of claim 2, wherein a diameter of the vacuum hole is 0.8 mm or more and 2 mm or less.

13. The apparatus of claim 2, wherein the vacuum hole is provided as a plurality of vacuum holes, and a distance between any one vacuum hole and another adjacent vacuum hole is 4 mm or more and 6 mm or less.

14. The apparatus of claim 2, wherein an average thickness of the fine concave-convex layer is 0.15 mm or more and 0.25 mm or less.

15. A method of manufacturing an electrode assembly, the method comprising:
attaching a tape to an outer periphery of the electrode assembly by using the apparatus for manufacturing an electrode assembly according to any one of claims 1 to 14.

16. The method of claim 15, further comprising:

sucking a non-bondable surface of the tape onto a tape supply roll; and
supplying the tape to the guide block and the outer periphery of the electrode assembly, which is accommodated in any one electrode assembly accommodation groove among the plurality of electrode assembly accommodation grooves, so that a bonding surface of the tape comes into contact with the guide block and the outer periphery of the electrode assembly.

17. The method of claim 16, wherein a rotation direction of the tape supply roll and a rotation direction of the rotary roll are different from each other.

18. The method of claim 16, wherein the supplying of the tape comprises:

bonding one end of the bonding surface of the tape on the rotating tape supply roll to the outer periphery of the electrode assembly, which is accommodated in any one electrode assembly accommodation groove among the plurality of electrode assembly accommodation grooves, by a rotation of the rotary roll; and

moving the tape from the tape supply roll to the outer periphery of the electrode assembly and the guide block by the continuous rotation of the tape supply roll and the continuous rotation of the rotary roll.

19. The method of claim 18, wherein the attaching of the tape to the outer periphery of the electrode assembly comprises rotating the electrode assembly to pull the remaining part of the tape being in contact with the guide block and bond the entire bonding surface of the tape to the outer periphery of the electrode assembly.

20. The method of claim 15, further comprising:
supplying electrode assemblies to the plurality of electrode assembly accommodation grooves.

21. The method of claim 15, further comprising:
recovering the electrode assembly to which the tape is attached.

22. The method of claim 15, further comprising:
cutting a tape unwound from a tape roll.

[FIG. 1]

[FIG. 2]

[FIG. 3]

[FIG. 4]

RECOVERY OF
ELECTRODE ASSEMBLY
TO WHICH TAPE IS ATTACHED

SUPPLY OF
ELECTRODE ASSEMBLY

ROTATION DIRECTION
100 OF ELECTRODE ASSEMBLY

ROTATION DIRECTION

ROTATION
DIRECTION

10

30

20

1

50

60

40

2'

2''

2''

2'

2

2''

[FIG. 5]

[FIG. 6]

[FIG. 7]

## INTERNATIONAL SEARCH REPORT

| International application No. |
|---|
| **PCT/KR2024/015056** |

### A. CLASSIFICATION OF SUBJECT MATTER

**H01M 10/04**(2006.01)i; **B65H 19/29**(2006.01)i; **B65H 35/00**(2006.01)i

According to International Patent Classification (IPC) or to both national classification and IPC

### B. FIELDS SEARCHED

Minimum documentation searched (classification system followed by classification symbols)

H01M 10/04(2006.01); B21C 47/06(2006.01); B65H 23/04(2006.01); B65H 35/00(2006.01); H01M 4/04(2006.01); H01M 50/178(2021.01); H01M 50/595(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 회전롤(rotating roll), 전극조립체(electrode assembly), 수용홈(receiving groove), 가이드블록(guide block), 홀더(holder)

### C. DOCUMENTS CONSIDERED TO BE RELEVANT

| Category* | Citation of document, with indication, where appropriate, of the relevant passages | Relevant to claim No. |
|---|---|---|
| A | KR 10-2023-0050861 A (LG ENERGY SOLUTION, LTD.) 17 April 2023 (2023-04-17)<br>See paragraphs [0026]-[0029] and figure 1. | 1-22 |
| A | KR 10-2022-0118042 A (MPLUS CORP.) 25 August 2022 (2022-08-25)<br>See paragraph [0037] and figure 1. | 1-22 |
| A | KR 10-2021-0053574 A (HYUNDAI MOTOR COMPANY et al.) 12 May 2021 (2021-05-12)<br>See paragraphs [0028]-[0044] and figure 2. | 1-22 |
| A | KR 10-2226492 B1 (FITO CO., LTD.) 11 March 2021 (2021-03-11)<br>See paragraphs [0029]-[0034] and figure 1. | 1-22 |
| A | JP 09-063565 A (TOSHIBA BATTERY CO., LTD. et al.) 07 March 1997 (1997-03-07)<br>See paragraphs [0021]-[0032] and figures 1-2. | 1-22 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **15 January 2025** | **15 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| International application No. |
| --- |
| **PCT/KR2024/015056** |

| Patent document cited in search report | | | Publication date (day/month/year) | Patent family member(s) | | | Publication date (day/month/year) |
| --- | --- | --- | --- | --- | --- | --- | --- |
| KR | 10-2023-0050861 | A | 17 April 2023 | None | | | |
| KR | 10-2022-0118042 | A | 25 August 2022 | KR | 10-2582047 | B1 | 22 September 2023 |
| KR | 10-2021-0053574 | A | 12 May 2021 | None | | | |
| KR | 10-2226492 | B1 | 11 March 2021 | CN | 111483865 | A | 04 August 2020 |
| | | | | CN | 111483865 | B | 12 April 2022 |
| | | | | KR | 10-2020-0093172 | A | 05 August 2020 |
| JP | 09-063565 | A | 07 March 1997 | JP | 3506818 | B2 | 15 March 2004 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230131820
- KR 1020240133909